# FASCICULE DE BREVET EUROPEEN

(11) **EP 3 755 908 B1**
(45) Date de publication et mention de la délivrance du brevet: **11.06.2025**
(21) Numéro de dépôt: 19708401.5
(22) Date de dépôt: 12.02.2019
(51) Int. Cl.: F16B 39/10, F16B 39/08

(54) **DISPOSITIF DE RETENUE POUR ORGANE FILETE, NOTAMMENT POUR ECROU**
HALTEVORRICHTUNG FÜR EIN GEWINDEELEMENT, INSBESONDERE FÜR EINE MUTTER
RETAINING DEVICE FOR A THREADED MEMBER, IN PARTICULAR FOR A NUT

(30) Priorité: 20.02.2018 FR 1851435
(43) Date de publication de la demande: 30.12.2020
(73) Titulaire: JPB Système, 77950 Montereau sur le Jard (FR)
(72) Inventeur: BEAUMEL, Jonathan, 77360 VAIRES SUR MARNE (FR); MESSAGER, Denis, 77000 MELUN (FR); MARC, Damien, 77115 BLANDY (FR)
(74) Mandataire: IPAZ
(86) Numéro de dépôt international: PCT/EP2019/053412
(87) Numéro de publication internationale: WO 2019/162146

(56) Documents cités:
- WO-A2-2006/088363
- JP-A- 2016 109 277
- US-A1- 2015 063 939

## Description

La présente invention concerne un dispositif de retenue pour organe fileté, notamment pour écrou.

Dans certaines applications, notamment dans des applications aéronautiques et plus particulièrement encore dans les moteurs d'avions, des fixations doivent être réalisées par vissage alors que l'un des organes filetés, typiquement un écrou, est très difficilement accessible pour être empêché de tourner pendant la rotation de vissage ou de dévissage de l'autre organe fileté, par exemple une vis.

On connaît des écrous qui peuvent être préalablement fixés en position appropriée pour le vissage ultérieur. Mais ces écrous sont souvent des écrous spéciaux, non standard. Il y a un autre problème avec de tels écrous : lorsque deux pièces doivent être fixées par plusieurs vis, de tels écrous positionnés fixement sur l'une des pièces empêchent tout rattrapage de tolérances dimensionnelles de cette pièce par rapport à l'autre. On connaît encore des écrous dits « flottants à cage », proposés par exemple par Raceparts (UK) Ltd, Unit 3, Rockfort Ind Est, Hithercroft Rd, Wallingford, UK, conformés spécialement pour s'accoupler avec jeu radial à un corps - ou cage - que l'on fixe préalablement à l'une des pièces. De tels écrous spéciaux posent des problèmes d'interchangeabilité et d'homologation dans les applications les plus exigeantes, telles que l'aéronautique. Un dispositif de retenue pour organe fileté de l'art antérieur est décrit dans le document JP2016109277A.

Un but de la présente invention est ainsi de proposer un dispositif de retenue pour organe fileté, notamment pour écrou, qui permette le vissage sans accès à l'organe fileté, permette de rattraper des tolérances et permette si on le souhaite l'utilisation d'organes filetés standard, notamment d'écrous standard.

Suivant l'invention, le dispositif de retenue pour organe fileté présente les caractéristiques techniques de la revendication 1.

L'élément intermédiaire et le corps coopèrent pour assurer le jeu radial permettant à l'organe fileté d'avoir une liberté de positionnement par rapport à la pièce lors du vissage. Il n'est donc plus nécessaire de recourir à un organe fileté conçu spécialement pour pouvoir être empêché de tourner tout en ayant cette liberté d'auto-positionnement. Un organe fileté standard, en particulier homologué pour l'application concernée, est utilisable.

En particulier, dans une réalisation, le couplage s'opposant à une rotation relative entre l'organe fileté et l'élément intermédiaire est sensiblement sans jeu radial et/ou sensiblement sans jeu de rotation autour de l'axe. Ainsi, la conformation de liaison de l'organe fileté coopère efficacement avec l'élément intermédiaire pour empêcher la rotation de l'organe fileté, notamment pendant le vissage et/ou à l'issue de celui-ci et/ou pendant le dévissage. Par « sensiblement sans jeu », on entend qu'il peut néanmoins y avoir un jeu minime du genre nécessaire entre un écrou et un outil de vissage dévissage usuel.

Dans certaines réalisations préférées, le couplage avec jeu radial entre l'élément intermédiaire et le corps présente en outre un jeu en rotation autour de l'axe. Ce jeu en rotation permet ou facilite le déplacement radial permis par le jeu radial. Il est en principe limité à une course angulaire juste suffisante pour permettre le libre déplacement radial permis par le jeu radial.

Typiquement, la conformation complémentaire portée par l'élément intermédiaire est conçue pour assurer ledit couplage avec une conformation de liaison d'écrou standard.

Dans une réalisation, la conformation complémentaire est un alésage cannelé, en particulier pour s'accoupler avec une tête de vis ou un écrou cannelé(e) extérieurement, d'un modèle standard dans certaines industries comme l'industrie aéronautique.

De préférence l'élément intermédiaire est une bague, capable de former avec l'organe fileté un couplage réparti tout autour de l'axe, typiquement à la manière d'un outil de vissage. Ceci rend, si on le souhaite, le dispositif capable d'empêcher la rotation de l'organe fileté même si le couple de vissage atteint la valeur maximale supportable par l'organe fileté utilisé.

Dans certaines réalisations, la bague est fermée, en ce sens qu'elle présente une continuité de matière tout autour de l'axe. Dans d'autres réalisations, la bague, sensiblement fermée, présente néanmoins une fente, par exemple dans un plan axial, permettant d'introduire dans l'orifice de la bague, pendant la fabrication, un fil d'usinage par électroérosion, pour l'usinage de ladite conformation complémentaire dans la paroi de l'alésage.

Typiquement, la bague entoure l'organe fileté et est entourée par au moins une partie du corps.

De préférence, l'élément intermédiaire, en particulier la bague, est essentiellement indéformable, en particulier inélastique, en ce sens que sa fonctionnalité ne repose pas sur sa déformation, en particulier sur son élasticité.

De préférence, les moyens d'accouplement sont formés sur une surface radialement extérieure de la bague, laquelle surface radialement extérieure présente ledit jeu radial avec une surface radialement intérieure du corps.

Dans une version, les moyens d'accouplement entre l'élément intermédiaire et le corps comprennent des dents radiales faisant saillie dans des logements d'une paroi cylindrique, les dents étant typiquement portées par l'élément intermédiaire. Les logements sont alors, dans une réalisation, des créneaux formés dans un bord de la paroi cylindrique, ledit bord étant tourné à l'opposé de la pièce. L'assemblage du dispositif est ainsi facilité et son encombrement radial est réduit.

Dans une réalisation avantageuse, une face des logements forme butée limitant le mouvement axial de l'élément intermédiaire vers la pièce à serrer. En particulier, cette face peut être le fond des créneaux précités.

Le dispositif comporte de préférence des moyens de retenue axiale retenant l'élément intermédiaire prisonnier du corps. Ainsi, au moins une fois installés, le corps et l'élément intermédiaire forment un ensemble indissociable. Cette indissociabilité est même obtenue avant montage si la butée précitée limitant le mouvement axial de l'élément intermédiaire est également utilisée.

Dans une réalisation, les moyens de retenue axiale comprennent une butée solidaire du corps, retenant l'élément intermédiaire du côté opposé à la pièce à serrer. La butée est de préférence portée par un capuchon fixé au corps, de préférence par sertissage. Le capuchon peut comporter une ouverture centrale, par exemple pour permettre le passage de l'extrémité libre d'une vis se vissant dans l'organe fileté lorsque celui-ci est un écrou.

Dans une autre réalisation, les logements sont fermés à leurs deux extrémités axiales de manière à retenir l'organe intermédiaire dans le corps à l'encontre des mouvements dans les deux sens, parallèlement à l'axe.

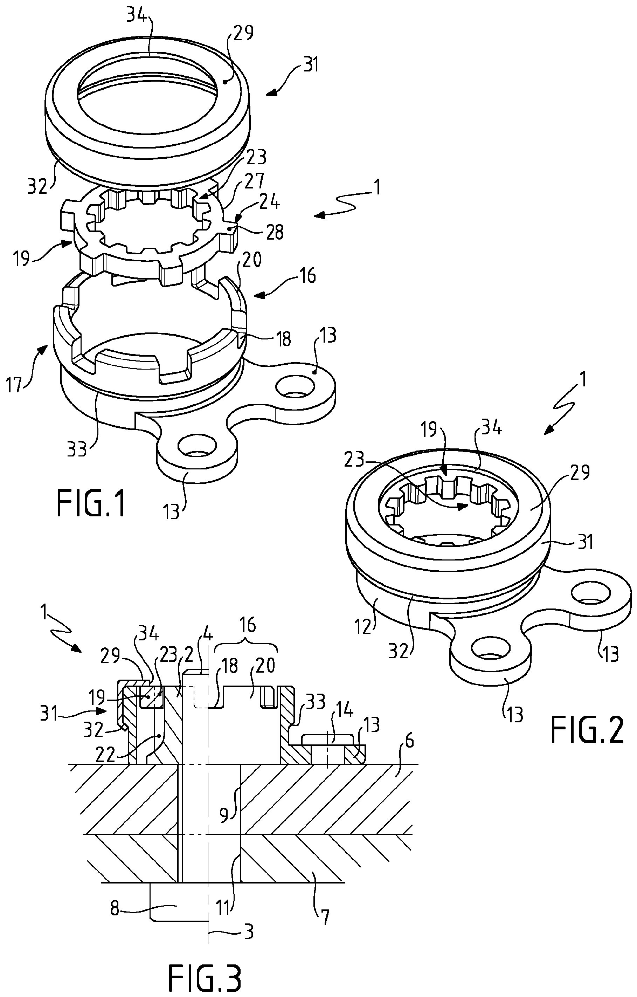

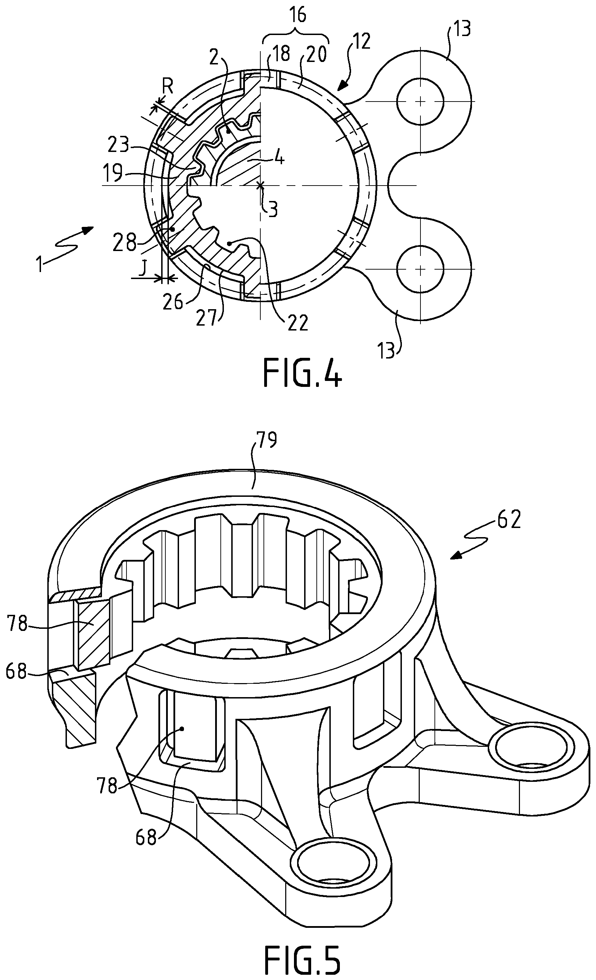

D'autres particularités et avantages de l'invention ressortiront encore de la description ci-après, et/ou des dessins annexés, auxquels :
■ la figure 1 est une vue en perspective éclatée du dispositif de retenue selon un premier mode de réalisation de l'invention ;
■ la figure 2 est une vue du dispositif de la figure 1 à l'état assemblé ;
■ la figure 3 est une vue en coupe axiale du corps installé sur une pièce, la demie-vue de gauche montrant en outre l'ensemble en service ;
■ la figure 4 est une vue de dessus, en coupe, montrant le corps dans la demie-vue de droite, assemblé avec l'élément intermédiaire dans la demie-vue de gauche, dont la moitié supérieure représente en outre l'écrou en tant qu'organe fileté et la vis vissée dans l'écrou ; et
■ la figure 5 est une vue en perspective, avec arrachement et coupe partielle, du dispositif de retenue selon un deuxième mode de réalisation.

Dans l'exemple représenté aux figures 1 à 4, le dispositif de retenue sert à empêcher la rotation d'un écrou 2 autour de son axe 3, notamment pendant qu'une vis 4 est en train d'être vissée, dévissée ou est à l'état vissé dans cet écrou. Le vissage a pour effet de serrer ensemble plusieurs pièces, ici deux pièces 6 et 7 l'une contre l'autre selon la direction axiale entre l'écrou 2 et la tête 8 de la vis 4. La pièce 6 adjacente à l'écrou est appelée « pièce à serrer », il s'agit par exemple d'un carter de moteur d'avion, l'autre pièce 7, adjacente à la tête de vis 8, appelée par exemple « pièce rapportée », est par exemple un composant à fixer sur le carter du moteur, typiquement par plusieurs systèmes de fixation comprenant chacun un écrou 2, une vis 4 et un dispositif de retenue 1. La vis 4 traverse un alésage 9 de la pièce à serrer 6 et un alésage 11 de la pièce rapportée 7. En raison des tolérances de fabrication il n'est pas toujours possible de parfaitement aligner les alésages 9 et 11 selon le même axe de vissage 3, de sorte que si l'écrou 2 était fixé à la pièce à serrer 6 le vissage pourrait être impossible. En outre, dans les applications plus particulièrement visées la face de la pièce à serrer 6 adjacente à l'écrou 2 est difficilement ou totalement inaccessible. Le dispositif de retenue 1 a pour double fonction d'empêcher l'écrou 2 de tourner tout en permettant à l'écrou 2 une certaine marge de déplacement radial pour que l'écrou 2 puisse s'aligner axialement avec la vis 4 même si les deux alésages 9, 11 présentent un certain désalignement, le diamètre de l'un au moins des alésages présentant une légère surcote, convenable au vu des tolérances précitées.

L'écrou 2 comporte sur son pourtour radialement extérieur une conformation de liaison 22 à l'égard des rotations autour de l'axe de vissage 3. Dans l'exemple représenté la conformation de liaison est une conformation standard, plus particulièrement une cannelure.

Le dispositif de retenue 1 comprend un corps 12 équipé de moyens de fixation à la pièce à serrer 6. Dans une réalisation les moyens de fixation sont deux oreilles 13 s'étendant radialement vers l'extérieur à partir du corps 12 proprement dit et destinées à être fixées à la pièce à serrer 6 par des rivets 14 (figure 3) qui ne sont qu'esquissés. La position des oreilles 13 autour de l'axe 3 peut varier d'une réalisation à l'autre selon la place disponible à la surface de la pièce 6. Les deux oreilles 13 pourraient par exemple être radialement opposées l'une à l'autre.

Dans l'exemple représenté le corps 12 a la forme d'un fût cylindrique ouvert à ses deux extrémités axiales, s'étendant en service selon l'axe de vissage 3 ou selon un axe parallèle à l'axe 3 mais légèrement décalé latéralement par rapport à l'axe 3.

Le corps 12 est équipé d'une conformation anti-rotation 16 capable d'empêcher la rotation de l'organe fileté, ici l'écrou 2, par rapport à la pièce 6 tout en permettant un jeu radial entre l'organe fileté 2 et le corps 12. Dans une réalisation où le corps 12 possède un fût cylindrique, la conformation anti-rotation est une alternance de créneaux 18 et de bossages 20 formée sur le bord 17 du fût tourné à l'opposé de la pièce à serrer 6.

Au lieu d'une interaction directe entre le corps 12 et l'écrou 2, le dispositif de retenue comprend en outre un élément intermédiaire 19 comportant :
■ une conformation 23 complémentaire de la conformation de liaison 22 de l'écrou 2, capable de réaliser un couplage s'opposant à une rotation relative entre l'organe fileté (écrou 2) et l'élément intermédiaire 19, et
■ des moyens d'accouplement 24 capables de réaliser avec la conformation anti-rotation 16 du corps 12 un couplage avec jeu radial s'opposant à une rotation relative entre l'élément intermédiaire 19 et le corps 12.

Ainsi, l'organe fileté (écrou 2) est empêché de tourner par rapport au corps 12 autour d'un axe parallèle à ou confondu avec l'axe 3. Le corps 12 étant lui-même fixé à la pièce à serrer 6, l'organe fileté (écrou 2) est empêché de tourner autour d'un tel axe par rapport à la pièce à serrer 6. Cependant, grâce au jeu radial de l'élément intermédiaire 19 relativement au corps 12, l'organe fileté 2 dispose d'une liberté de déplacement radial relativement à la pièce à serrer 6 pour s'auto-centrer sur la vis 4. La vis est elle-même positionnée par les alésages 9 et 11 qui, contrairement à ce qui est représenté de manière schématique, sont en général légèrement décalés latéralement l'un par rapport à l'autre, notamment en raison de tolérances de fabrication.

De préférence le couplage s'opposant à une rotation relative entre l'organe fileté 2 et l'élément intermédiaire 19 est sensiblement sans jeu radial et sans jeu en rotation autour de l'axe 1. Ainsi la prise entre l'organe fileté 2 et l'élément intermédiaire 19 est parfaitement conforme à ce qui est prévu pour l'application du couple de retenue à l'écrou 2 lors du vissage. Le jeu radial est entièrement assuré plus loin de l'axe, donc sous des efforts plus faibles, entre l'élément intermédiaire 19 et le corps 12.

Dans l'exemple choisi ici d'un organe fileté ayant une cannelure comme conformation de liaison, la conformation complémentaire est de préférence un alésage cannelé complémentaire de la cannelure de l'organe fileté (écrou 2).

Notamment mais non limitativement, dans l'exemple ci-dessus, l'élément intermédiaire 19 est de préférence une bague. De préférence la bague entoure l'organe fileté (écrou 2), et est entourée par une partie du corps 12, notamment lorsque celui-ci est réalisé en forme de fût comme indiqué précédemment.

Lorsque l'élément intermédiaire est une bague, les moyens d'accouplement de l'élément intermédiaire 19 avec le corps 12 peuvent être formés sur une surface radialement extérieure 27 de la bague, laquelle surface radialement extérieure présente ledit jeu radial J (figure 4) avec une surface radialement intérieure 26 du corps.

Dans certaines réalisations telles que celle représentée, les moyens d'accouplement entre l'élément intermédiaire 19 et le corps 12 comprennent des dents radiales 28 qui font saillie dans des logements, ici les créneaux 18, d'une paroi cylindrique qui donc dans cet exemple appartient au corps 12, les dents radiales étant portées ici par l'élément intermédiaire 19.

Même quand l'élément intermédiaire 19 est décentré au maximum dans le corps 12, aucune dent 28 ne peut se dégager de son logement. Dans l'exemple représenté cela est obtenu par une longueur radiale des dents 28 qui est supérieure au jeu diamétral 2J (double du jeu radial J).

De préférence, une face des logements, ici le fond des créneaux 18, forme butée limitant le mouvement axial de l'élément intermédiaire 19 vers la pièce à serrer 6. Le mouvement axial de l'élément intermédiaire 19 est plus précisément, dans l'exemple représenté, limité par l'appui des dents 28 contre le fond des créneaux 18.

De préférence, le couplage avec jeu radial J entre l'élément intermédiaire 19 et le corps 12 présente en outre un jeu en rotation R (figure 4) de part et d'autre d'une position angulaire relative moyenne autour de l'axe 1. Ce jeu en rotation facilite le déplacement radial de l'élément intermédiaire 19 par rapport au corps 12.

Dans l'exemple représenté les cannelures de l'écrou 2 et de la bague 19 sont plus nombreuses, en particulier deux fois plus nombreuses, que les dents 28 et les créneaux 18.

Les dessins sont typiquement à échelle agrandie, par exemple à échelle 2,5. Dans un tel cas un jeu radial de l'ordre de 0,5 mm (donc 1 mm sur le diamètre) entre l'élément intermédiaire 19 et le corps 12 est approprié dans certaines applications. Mais l'invention n'est pas limitée à des dimensionnements en particuliers.

De préférence le dispositif comporte des moyens de retenue axiale retenant l'élément intermédiaire prisonnier du corps. Dans un exemple ces moyens comprennent une butée 29 rendue solidaire du corps 12, et retenant l'élément intermédiaire 19 du côté opposé à la pièce à serrer 6. L'élément intermédiaire 19 jouit d'un jeu axial réduit mais suffisant pour permettre son déplacement radial permis par le jeu radial discuté précédemment, par rapport au corps 12.

La butée peut être portée par un capuchon 31 fixé au corps. Dans l'exemple représenté, cette fixation est réalisée par sertissage de son bord inférieur 32 derrière un épaulement oblique 33 du corps. A la figure 1, le bord inférieur du capuchon est représenté dans sa forme conique après sertissage, ce bord étant cylindrique avant sertissage.

Le capuchon 31 comporte typiquement une ouverture centrale 34, entourée par un collet formant la butée 29.

Le dispositif de retenue est par exemple réalisable en alliage Inconel.

Le mode de réalisation représenté à la Figure 5 ne sera décrit que pour ses différences avec celui des Figures 1 à 4 et ses éléments analogues à ceux du mode réalisation des Figures 1 à 4 y seront affectés d'un référence numérique augmentée de 50.

La butée 79 est venue de matière avec le corps 62, et fait donc partie intégrante du corps 62. Pour cela, dans une réalisation, le corps 62 et la bague 69 sont réalisés conjointement par impression 3D, la bague 69 étant directement obtenue prisonnière du corps 62. Dans une réalisation, les logements 68 sont des fenêtres fermées axialement, du côté opposé à la pièce à serrer, par la butée 79, au lieu d'être, comme dans l'exemple des Figures 1 à 4, des créneaux ouverts du côté opposé à la pièce, puis fermés par le capuchon 31 dont la pose exige des opérations supplémentaires à la fabrication.

La bague 69 est prisonnière axialement du corps 62 du fait que les dents 78 sont interposées entre la butée 79 et la face des fenêtres qui fait face à cette butée.

Les dents 78, analogues aux dents 28 du mode de réalisation précédent, sont engagées dans les fenêtres 68 avec une liberté de mouvement suffisante pour assurer entre la bague 69 et le corps 62 le jeu radial proposé par l'invention. Cependant, toujours comme dans le mode de réalisation précédent, les dents sont suffisamment longues radialement pour ne pas pouvoir se dégager des fenêtres 68 mais en cas de décentrement maximum de la bague 69 dans le corps 62.

Une structure semblable à celle de la Figure 5 est également réalisable par procédé MIM (Moulage par Injection de Métal) utilisant de la poudre métallique agglomérée par frittage, comme le propose notamment la société Alliance MIM, Zi Foulottière, 22 rue de l'Europe, 25410 Saint-Vit, France.

Bien entendu, l'invention n'est pas limitée à l'exemple décrit et représenté. Un écrou à conformation de liaison standard pourrait être un écrou autre que cannelé, par exemple un écrou à six pans, auquel cas l'élément intermédiaire pourrait présenter en tant que conformation complémentaire un six pans creux ou un douze pans creux. On pourrait remplacer le capuchon par un sertissage d'une partie déformable du corps, ou encore par un jonc d'arrêt élastique, type Circlips, inséré dans l'alésage du corps. Si un capuchon est utilisé, il pourrait être fixé non par sertissage, mais par exemple par soudage, notamment par points, ou encore par frettage. Le corps tel que 12 pourrait être serti ou bien encliqueté sur la pièce telle que 6, auquel cas les oreilles telles que 13 ne seraient pas nécessairement présentes.

## Revendications

1. - Dispositif de retenue pour organe fileté, notamment pour écrou (2), pour retenir ledit organe fileté pendant qu'il subit une opération de vissage ou de dévissage selon un axe de vissage, ou pendant qu'il est à l'état vissé, l'organe fileté (2) comportant une conformation de liaison à l'égard des rotations autour de l'axe et s'appuyant au moins indirectement sur une pièce (6) à serrer par action du vissage, le dispositif comprenant un corps (12, 62) destiné à être fixé à la pièce (6) et équipé d'une conformation anti-rotation (16) capable d'empêcher la rotation de l'organe fileté (2) par rapport à la pièce (6) tout en permettant un jeu radial (J) entre l'organe fileté (2) et le corps (12, 62), où le dispositif comprend en outre un élément intermédiaire (19, 69) comportant :
■ une conformation complémentaire (23) de la conformation de liaison (22) en état assemblé, capable de réaliser un couplage s'opposant à une rotation relative entre l'organe fileté (2) et l'élément intermédiaire (19, 69), et **caractérisé en ce que** l'élément intermédiaire comporte aussi
■ des moyens d'accouplement (24, 28, 78) capables de réaliser avec la conformation anti-rotation (16) du corps (12, 62) un couplage avec jeu radial s'opposant à une rotation relative entre l'élément intermédiaire (19, 69) et le corps (12, 62), le jeu radial permettant à l'organe fileté (2) d'avoir une liberté de positionnement par rapport à la pièce (6) lors du vissage.

2. - Dispositif de retenue selon la revendication 1, **caractérisé en ce que** le couplage s'opposant à une rotation relative entre l'organe fileté (2) et l'élément intermédiaire (19, 69) est sensiblement sans jeu radial.

3. - Dispositif de retenue selon la revendication 1 ou 2, **caractérisé en ce que** le couplage s'opposant à une rotation relative entre l'organe fileté (2) et l'élément intermédiaire (19, 69) est sensiblement sans jeu en rotation autour de l'axe (3).

4. - Dispositif de retenue selon l'une quelconque des revendications 1 à 3, **caractérisé en ce que** le couplage avec jeu radial (J) présente en outre un jeu (R) en rotation autour de l'axe (3).

5. - Dispositif de retenue selon l'une quelconque des revendications 1 à 4, **caractérisé en ce que** la conformation complémentaire (23) est conçue pour assurer ledit couplage avec une conformation de liaison (22) d'écrou (2) standard.

6. - Dispositif de retenue selon l'une des revendications 1 à 5, **caractérisé en ce que** la conformation complémentaire (23) est un alésage cannelé.

7. - Dispositif de retenue selon l'une quelconque des revendications 1 à 6, **caractérisé en ce que** l'élément intermédiaire (19, 69) est une bague, en particulier une bague sensiblement fermée autour de l'axe (3).

8. - Dispositif de retenue selon la revendication 7, **caractérisé en ce que** la bague (19, 69) entoure l'organe fileté (2) et est entourée par au moins une partie du corps (12, 62).

9. - Dispositif de retenue selon la revendication 7 ou 8, **caractérisé en ce que** les moyens d'accouplement (24, 28, 78) sont formés sur une surface radialement extérieure (27) de la bague (19, 69), laquelle surface radialement extérieure présente ledit jeu radial (J) avec une surface radialement intérieure (26) du corps (12, 62).

10. - Dispositif de retenue selon l'une quelconque des revendications 1 à 9, **caractérisé en ce que** les moyens d'accouplement comprennent des dents radiales (28, 78) faisant saillie dans des logements (18, 68) d'une paroi cylindrique.

11. - Dispositif de retenue selon la revendication 10, **caractérisé en ce que** les dents (28, 78) appartiennent à l'élément intermédiaire (19, 69).

12. - Dispositif de retenue selon la revendication 11, **caractérisé en ce que** les logements sont des créneaux (18) formés dans un bord de la paroi cylindrique, ledit bord étant tourné à l'opposé de la pièce (6).

13. - Dispositif de retenue selon l'une quelconque des revendications 10 à 12, **caractérisé en ce qu'**une face des logements (18) forme butée limitant le mouvement axial de l'élément intermédiaire (19) vers la pièce à serrer (6).

14. - Dispositif de retenue selon la revendication 11, **caractérisé en ce que** les logements (78) sont fermés à leurs deux extrémités axiales de manière à retenir l'élément intermédiaire (69) dans le corps (62) à l'encontre des mouvements dans les deux sens, axialement.

15. - Dispositif de retenue selon l'une quelconque des revendications 1 à 13, **caractérisé en ce qu'**il comporte des moyens de retenue axiale (29, 79) retenant l'élément intermédiaire (19, 69) prisonnier du corps (12, 62).

16. - Dispositif de retenue selon la revendication 15, **caractérisé en ce que** les moyens de retenue axiale comprennent une butée (29, 79) solidaire du corps (12, 62), retenant l'élément intermédiaire (19, 69) du côté opposé à la pièce à serrer (6).

17. - Dispositif de retenue selon la revendication 15, **caractérisé en ce que** la butée (29) est portée par un capuchon (31) fixé au corps (12), de préférence par sertissage.

18. - Dispositif de retenue selon la revendication 16, **caractérisé en ce que** le capuchon (31) comporte une ouverture centrale (34).

19. - Dispositif selon l'une des revendications 1 à 17, **caractérisé en ce que** l'élément intermédiaire (19, 69) est essentiellement indéformable, en particulier inélastique.

## Patentansprüche

1. Haltevorrichtung für ein Gewindeelement, insbesondere für eine Mutter (2), zum Halten des Gewindeelements während es einen Einschraub- oder Ausschraubvorgang entlang einer Einschraubachse erfährt oder während es sich in dem eingeschraubten Zustand befindet, wobei das Gewindeelement (2) eine Verbindungskonstruktion hinsichtlich Drehungen um die Achse aufweist und mindestens indirekt auf einem durch den Einschraubvorgang anzuziehenden Stück (6) aufliegt, die Vorrichtung umfassend einen Körper (12, 62), der dafür bestimmt ist, an dem Stück (6) befestigt zu werden und mit einer Drehsicherungsgestaltung (16) ausgestattet ist, die fähig ist, die Drehung des Gewindeelements (2) relativ zu dem Stück (6) zu verhindern, gleichzeitig ein radiales Spiel (J) zwischen dem Gewindeelement (2) und dem Körper (12, 62) zuzulassen, wobei die Vorrichtung ferner ein Zwischenelement (19, 69) umfasst, aufweisend:
▪ eine komplementäre Gestaltung (23) der Verbindungsgestaltung (22) in einem montierten Zustand, die fähig ist, eine Kopplung, die einer relativen Drehung entgegenwirkt, zwischen dem Gewindeelement (2) und dem Zwischenelement (19, 69) bereitzustellen, und **dadurch gekennzeichnet, dass** das Zwischenelement außerdem aufweist:
▪ Kopplungsmittel (24, 28, 78), die fähig sind, mit der Drehsicherungsgestaltung (16) des Körpers (12, 62) eine Kopplung mit radialem Spiel, die einer relativen Drehung entgegenwirkt, zwischen dem Zwischenelement (19, 69) und dem Körper (12, 62) bereitzustellen, wobei das radiale Spiel dem Gewindeelement (2) bei dem Einschrauben eine freie Positionierung relativ zu dem Stück (6) ermöglicht.

2. Haltevorrichtung nach Anspruch 1, **dadurch gekennzeichnet, dass** die Kopplung, die einer relativen Drehung entgegenwirkt, zwischen dem Gewindeelement (2) und dem Zwischenelement (19, 69) im Wesentlichen kein radiales Spiel besitzt.

3. Haltevorrichtung nach Anspruch 1 oder 2, **dadurch gekennzeichnet, dass** die Kopplung, die einer relativen Drehung entgegenwirkt, zwischen dem Gewindeelement (2) und dem Zwischenelement (19, 69) im Wesentlichen bei Drehung um die Achse (3) kein Spiel besitzt.

4. Haltevorrichtung nach einem der Ansprüche 1 bis 3, **dadurch gekennzeichnet, dass** die Kopplung mit radialem Spiel (J) ferner ein Spiel (R) bei Drehung um die Achse (3) vorweist.

5. Haltevorrichtung nach einem der Ansprüche 1 bis 4, **dadurch gekennzeichnet, dass** die komplementäre Ausgestaltung (23) dazu konzipiert ist, die Kopplung mit einer Verbindungsausgestaltung (22) einer Standardmutter (2) sicherzustellen.

6. Haltevorrichtung nach einem der Ansprüche 1 bis 5, **dadurch gekennzeichnet, dass** die komplementäre Ausgestaltung (23) eine geriffelte Bohrung ist.

7. Haltevorrichtung nach einem der Ansprüche 1 bis 6, **dadurch gekennzeichnet, dass** das Zwischenelement (19, 69) ein Ring, insbesondere ein im Wesentlichen um die Achse (3) geschlossener Ring, ist.

8. Haltevorrichtung nach Anspruch 7, **dadurch gekennzeichnet, dass** der Ring (19, 69) das Gewindeelement (2) umgibt und durch mindestens einen Teil des Körpers (12, 62) umgeben ist.

9. Haltevorrichtung nach Anspruch 7 oder 8, **dadurch gekennzeichnet, dass** die Kopplungsmittel (24, 28, 78) auf einer radial äußeren Oberfläche (27) des Rings (19, 69) ausgebildet sind, wobei die radial äußere Oberfläche den radialen Abstand (J) zu einer radial inneren Oberfläche (26) des Körpers (12, 62) vorweist.

10. Haltevorrichtung nach einem der Ansprüche 1 bis 9, **dadurch gekennzeichnet, dass** die Kopplungsmittel radiale Zähne (28, 78) umfassen, die in Aufnahmen (18, 68) einer zylindrischen Wand hineinragen.

11. Haltevorrichtung nach Anspruch 10, **dadurch gekennzeichnet, dass** die Zähne (28, 78) zu dem Zwischenelement (19, 69) gehören.

12. Haltevorrichtung nach Anspruch 11, **dadurch gekennzeichnet, dass** die Aufnahmen Lücken (18) sind, die in einer Kante der zylindrischen Wand ausgebildet sind, wobei die Kante von dem Stück (6) abgewandt ist.

13. Haltevorrichtung nach einem der Ansprüche 10 bis 12, **dadurch gekennzeichnet, dass** eine Fläche der Aufnahmen (18) einen Anschlag ausbildet, der die axiale Bewegung des Zwischenelements (19) in Richtung des anzuziehenden Stücks (6) begrenzt.

14. Haltevorrichtung nach Anspruch 11, **dadurch gekennzeichnet, dass** die Aufnahmen (78) an ihren zwei axialen Enden geschlossen sind, um das Zwischenelement (69) axial gegen Bewegungen in den zwei Richtungen in dem Körper (62) festzuhalten.

15. Haltevorrichtung nach einem der Ansprüche 1 bis 13, **dadurch gekennzeichnet, dass** es axiale Haltemittel (29, 79) aufweist, die das Zwischenelement (19, 69) in dem Körper (12, 62) festhalten.

16. Haltevorrichtung nach Anspruch 15, **dadurch gekennzeichnet, dass** die axialen Haltemittel einen Anschlag (29, 79), der mit dem Körper (12, 62) fest verbunden ist, umfassen, der das Zwischenelement (19, 69) auf der dem anzuziehenden Stück (6) gegenüberliegenden Seite hält.

17. Haltevorrichtung nach Anspruch 15, **dadurch gekennzeichnet, dass** der Anschlag (29) durch eine Kappe (31) getragen wird, die an dem Körper (12), vorzugsweise durch Bördeln, befestigt ist.

18. Haltevorrichtung nach Anspruch 16, **dadurch gekennzeichnet, dass** die Kappe (31) eine zentrale Öffnung (34) aufweist.

19. Vorrichtung nach einem der Ansprüche 1 bis 17, **dadurch gekennzeichnet, dass** das Zwischenelement (19, 69) im Wesentlichen unverformbar, insbesondere unelastisch, ist.

## Claims

1. - Retaining device for a threaded member, in particular for a nut (2), for retaining said threaded member while it undergoes an operation of screwing or unscrewing along a screw axis, or while it is in the screwed-home state, the threaded member (2) comprising a linking shape with respect to the rotations about the axis and supported at least indirectly on a part (6) to be tightened by screwing action, the device comprising a body (12, 62) intended to be fastened to the part (6) and equipped with an anti-rotation shape (16) capable of preventing the rotation of the threaded member (2) with respect to the part (6) while allowing radial clearance (J) between the threaded member (2) and the body (12, 62), wherein the device also comprises an intermediate element (19, 69) comprising:
- a shape (23) complementary to the linking shape (22), capable of producing a coupling opposing a relative rotation between the threaded member (2) and the intermediate element (19, 69),
and **characterized in that** the intermediate element also comprises:
- coupling means (24, 28, 78) capable of producing, with the anti-rotation shape (16) of the body (12, 62) a coupling with radial clearance opposing a relative rotation between the intermediate element (19, 69) and the body (12, 62), the radial clearance allowing the threaded member (2) to have freedom of positioning with respect to the part (6) during screwing.

2. - Retaining device according to claim 1, **characterized in that** the coupling opposing a relative rotation between the threaded member (2) and the intermediate element (19, 69) is substantially without radial clearance.

3. - Retaining device according to claim 1 or 2, **characterized in that** the coupling opposing a relative rotation between the threaded member (2) and the intermediate element (19, 69) is substantially without rotational clearance about the axis (3).

4. - Retaining device according to any one of claims 1 to 3, **characterized in that** the coupling with radial clearance (J) also has rotational clearance (R) about the axis (3).

5. - Retaining device according to any one of claims 1 to 4, **characterized in that** the complementary shape (23) is designed to ensure said coupling with a linking shape (22) of a standard nut (2).

6. - Retaining device according to one of claims 1 to 5, **characterized in that** the complementary shape (23) is a splined bore.

7. - Retaining device according to any one of claims 1 to 6, **characterized in that** the intermediate element (19, 69) is a ring, in particular a ring substantially closed about the axis (3).

8. - Retaining device according to claim 7, **characterized in that** the ring (19, 69) surrounds the threaded member (2) and is surrounded by at least a part of the body (12, 62).

9. - Retaining device according to claim 7 or 8, **characterized in that** the coupling means (24, 28, 78) are formed on a radially outer surface (27) of the ring (19, 69), said radially outer surface having said radial clearance (J) with a radially inner surface (26) of the body (12, 62).

10. - Retaining device according to any one of claims 1 to 9, **characterized in that** the coupling means comprise radial teeth (28, 78) projecting into recesses (18, 68) in a cylindrical wall.

11. - Retaining device according to claim 10, **characterized in that** the teeth (28, 78) belong to the intermediate element (19, 69).

12. - Retaining device according to claim 11, **characterized in that** the recesses are notches (18) formed in an edge of the cylindrical wall, said edge being turned away from the part (6).

13. - Retaining device according to any one of claims 10 to 12, **characterized in that** a face of the recesses (18) forms a stop limiting the axial movement of the intermediate element (19) towards the part to be tightened (6).

14. - Retaining device according to claim 11, **characterized in that** the recesses (78) are closed at the two axial ends thereof so as to retain the intermediate element (69) in the body (62) against movements in both directions, axially.

15. - Retaining device according to any one of claims 1 to 13, **characterized in that** it comprises axial retaining means (29, 79) retaining the intermediate element (19, 69) captive in the body (12, 62).

16. - Retaining device according to claim 15, **characterized in that** the axial retaining means comprise a stop (29, 79) firmly fixed to the body (12, 62), retaining the intermediate element (19, 69) on the opposite side to the part to be tightened (6).

17. - Retaining device according to claim 15, **characterized in that** the stop (29) is borne by a cap (31) fastened to the body (12), preferably by crimping.

18. - Retaining device according to claim 16, **characterized in that** the cap (31) comprises a central opening (34).

19. - Retaining device according to one of claims 1 to 17, **characterized in that** the intermediate element (19, 69) is essentially not capable of deformation, in particular is inelastic.
